# EUROPEAN PATENT APPLICATION

(11) **EP 4 465 528 A1**
(43) Date of publication of application: **20.11.2024**
(21) Application number: 23785706.5
(22) Date of filing: 16.06.2023
(51) Int. Cl.: H02S 20/30, F24S 30/425

(54) **SUPPORT DEVICE**

(30) Priority: 16.03.2023 CN 202310253365
(71) Applicant: Hengdian Group DMEGC Magnetics Co., Ltd., Jinhua, Zhejiang 322118 (CN)
(72) Inventor: WU, Yuche, Jinhua, Zhejiang 322118 (CN); LOU, Caoxin, Jinhua, Zhejiang 322118 (CN); ZHAO, Jing, Jinhua, Zhejiang 322118 (CN); ZHAO, Lin, Jinhua, Zhejiang 322118 (CN)
(74) Representative: Cabinet Beaumont
(86) International application number: PCT/CN2023/100598
(87) International publication number: WO 2024/187613

(57) **Abstract**

Provided is a support apparatus configured to support a photovoltaic assembly. A first plate body and a second plate body included in the photovoltaic assembly are sequentially connected in a preset direction. A first support assembly engages between the first side of the first plate body and the first side of the second plate body and is configured to support the first side of the first plate body and the first side of the second plate body above a baseplate. Two second support assemblies are inserted between the second side of the first plate body and the baseplate and between the second side of the second plate body and the baseplate respectively. The two second support assemblies are connected to the second side of the first plate body and the second side of the second plate body respectively so that an isosceles triangle can be formed between the first plate body, the second plate body and the baseplate.

## Description

The present application claims priority to Chinese Patent Application No. 202310253365.4, filed with the China National Intellectual Property Administration (CNIPA) on Mar. 16, 2023, the disclosure of which is incorporated herein by reference in its entirety.

### TECHNICAL FIELD

The present application relates to the technical field of photovoltaic power generation, for example, a support apparatus.

### BACKGROUND

Photovoltaic power generation converts sunlight to electricity using solar cells according to the principle of photovoltaic effect. Photovoltaic power generation has the characteristics of reliability, stability and easy installation and maintenance. A photovoltaic power system includes a photovoltaic assembly and a rack. Since the rack is used for supporting the photovoltaic assembly, the rack is one of the major factors that enable the photovoltaic power system to reliably generate electricity for a long time.

In the related art, the installation mode of the rack and the photovoltaic assembly includes that a cement pier is placed on the ground to play a bearing role, a column is disposed on the upper portion of the cement pier, a connector is used between the column and the cement pier, the column is secured to the cement pier through screws, a diagonal column is used for fixation on the side to strengthen the stability of a support assembly, a vertical rack for fixation is installed on the upper portion, a horizontal rack is arranged, the racks are connected through screws, the upper ends of the racks are installed with a traditional assembly, and the traditional assembly is secured to the racks though pressing blocks.

There are many connecting racks used in the preceding rack, so the installation is cumbersome, resulting in an increase in the overall cost. The basic joints are all connected by screws, so the structure is not novel enough, and the installation is not very convenient. The bottom of the assembly is suspended without a certain support structure, so it is easy to slide during the installation process.

In the related art, the rack is mainly installed as a monolithic assembly without effective utilization of the space area. In an installation environment having a limited area, the number of assemblies arranged is relatively small, and the structure is not beautiful. For the installation arrangement facing the south, in a region having high dimensions, the next row of assemblies has a noticeable shading. To prevent the shading from affecting the power generation amount, the distance from the next row of assemblies to the previous row of assemblies needs to exceed the shading region, affecting the overall power generation amount.

### SUMMARY

The present application provides a support apparatus, which can solve the problems in the related art that a support apparatus supports photovoltaic assemblies arranged in the south-north direction, the installation operation is complex, and there exists a shading region.

An embodiment of the present application provides a support apparatus. A photovoltaic assembly includes a first plate body and a second plate body that are sequentially connected in a preset direction.

The support apparatus includes a first support assembly, two second support assemblies and a baseplate.

The first support assembly engages between a first side of the first plate body and a first side of the second plate body and is configured to support the first side of the first plate body and the first side of the second plate body above the baseplate.

The two second support assemblies are inserted between a second side of the first plate body and the baseplate and between a second side of the second plate body and the baseplate respectively, and the two second support assemblies are obliquely connected to the second side of the first plate body and the second side of the second plate body respectively to enable an isosceles triangle to be formed between the first plate body, the second plate body and the baseplate.

The first side of the first plate body is opposite to the first side of the second plate body, the second side and first side of the first plate body are opposite sides of the first plate body, and the first side and second side of the second plate body are opposite sides.

### BRIEF DESCRIPTION OF DRAWINGS

FIG. 1 is a diagram illustrating the structure of a support apparatus according to embodiment one of the present application.
FIG. 2 is a diagram illustrating the structure of a connection between a first support assembly and a photovoltaic assembly according to embodiment one of the present application.
FIG. 3 is a diagram illustrating the structure of a connection between a second support assembly and a first plate body according to embodiment one of the present application.
FIG. 4 is a diagram illustrating the structure of a baseplate according to embodiment one of the present application.
FIG. 5 is a diagram illustrating the structure of a first support assembly according to embodiment one of the present application.
FIG. 6 is a diagram illustrating the structure of a connection between a first support assembly and a first support column according to embodiment one of the present application.
FIG. 7 is a diagram illustrating the structure of a first connector according to embodiment one of the present application.
FIG. 8 is a diagram illustrating the structure of a second connector according to embodiment one of the present application.
FIG. 9 is a diagram illustrating the structure of a first adjustment state of a second support assembly according to embodiment one of the present application.
FIG. 10 is a diagram illustrating the structure of a second adjustment state of a second support assembly according to embodiment one of the present application.
FIG. 11 is a diagram illustrating the structure of a connection between a second support assembly and a first plate body according to embodiment two of the present application.
FIG. 12 is a diagram illustrating the structure of a third connector according to embodiment two of the present application.
FIG. 13 is a diagram illustrating the structure of an insert cover according to embodiment two of the present application.
FIG. 14 is a diagram illustrating the structure of a connection between a first support assembly and a baseplate according to embodiment three of the present application.
FIG. 15 is a diagram illustrating the structure of a connection between a first support assembly and a baseplate according to embodiment four of the present application.
FIG. 16 is a diagram illustrating the structure of a connection between a second support column and a baseplate according to embodiment four of the present application.
FIG. 17 is a diagram illustrating the structure of a connection between a first support assembly and a baseplate according to embodiment five of the present application.

### Reference list

- 1: photovoltaic assembly
- 11: first plate body
- 12: second plate body
- 2: first support assembly
- 21: first inserting member
- 211: first inserting groove
- 212: second inserting groove
- 213: first sidewall
- 214: second sidewall
- 215: guidance plate
- 216: connecting plate
- 22: first support column
- 23: second inserting member
- 231: fifth inserting groove
- 232: sixth inserting groove
- 233: first protruding block
- 24: connecting portion
- 241: seventh inserting groove
- 242: eighth inserting groove
- 243: connecting panel
- 25: support frame
- 251: first support rod group
- 252: second support rod group
- 253: stiffener
- 254: second support column
- 2541: notch, second support column
- 255: attaching rod
- 256: first resilient leg
- 257: second resilient leg
- 258: buckle structure
- 259: bottom support
- 260: support rod
- 3: second support assembly
- 31: first connector
- 311: third inserting groove
- 312: limiting portion
- 313: first toothed surface
- 32: second connector
- 321: connecting rod
- 322: rotation engagement portion
- 323: second toothed surface
- 33: third connector
- 331: fourth inserting groove
- 332: I-shaped groove
- 333: connecting ring
- 34: insert cover
- 4: baseplate
- 41: groove
- 42: limiting edge
- 5: bearing rack
- 51: bearing base
- 511: bearing plate
- 512: baffle

### DETAILED DESCRIPTION

In the description of the present application, the terms "joined", "connected" and "secured" are to be understood in a broad sense unless otherwise expressly specified and limited. For example, the term "connected" may refer to securely connected, detachably connected, or integrated, may refer to mechanically connected or electrically connected, or may refer to connected directly, connected indirectly through an intermediary, connected inside two elements, or interaction relations between two elements. For those of ordinary skill in the art, specific meanings of the preceding terms in the present application may be understood based on specific situations.

In the present application, unless otherwise expressly specified and limited, when a first feature is described as "on" or "below" a second feature, the first feature and the second feature may be in direct contact or be in contact via another feature between the two features instead of being in direct contact. Moreover, when the first feature is described as "on", "above", or "over" the second feature, the first feature is right on, above, or over the second feature, or the first feature is obliquely on, above, or over the second feature, or the first feature is simply at a higher level than the second feature. When the first feature is described as "under", "below", or "underneath" the second feature, the first feature is right under, below, or underneath the second feature, or the first feature is obliquely under, below, or underneath the second feature, or the first feature is simply at a lower level than the second feature.

In the description of the present application, it should be noted that orientations or position relations indicated by terms such as "above", "below", "right" and the like are based on orientations or position relations shown in the drawings. These orientations or position relations are intended only to facilitate and simplify the operation, and not to indicate or imply that a device or element referred to must have such specific orientations or must be configured or operated in such specific orientations. Thus, these orientations or position relations are not to be construed as limiting the present application. In addition, the terms "first" and "second" are used only for distinguishing between descriptions and have no special meaning.

### Embodiment one

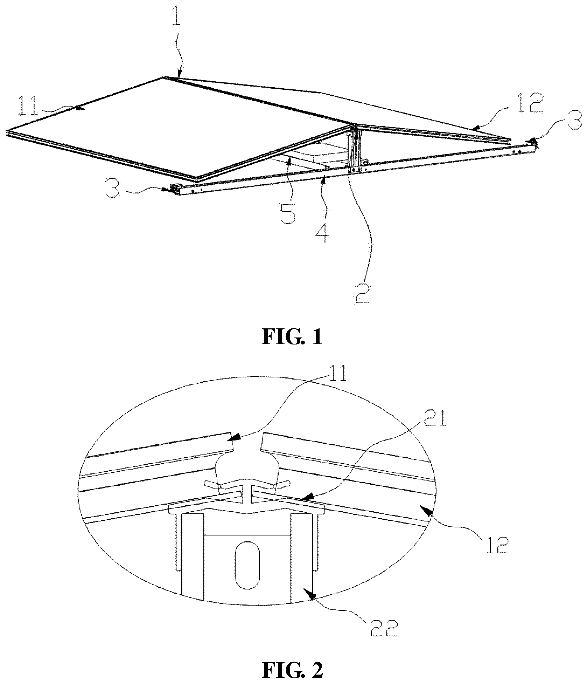

First, referring to FIGS. 1 to 10, the present application provides a support apparatus for a photovoltaic assembly 1; the photovoltaic assembly 1 includes a first plate body 11 and a second plate body 12 that are sequentially connected in the east-west direction; the support apparatus includes a first support assembly 2, two second support assemblies 3 and a baseplate 4; the first support assembly 2 engages between the right side of the first plate body 11 and the left side of the second plate body 12 and can support the right side of the first plate body 11 and the left side of the second plate body 12 above the baseplate 4; and the two second support assemblies 3 are inserted between the left side of the first plate body 11 and the baseplate 4 and between the right side of the second plate body 12 and the baseplate 4 respectively, and one second support assembly 3 is obliquely connected to the left side of the first plate body 11 while another second support assembly 3 is obliquely connected to the right side of the second plate body 12 so that an isosceles triangle can be formed between the first plate body 11, the second plate body 12 and the baseplate 4.

In each embodiment of the present application, the left side and right side refer to the left direction and right direction in the drawings, which is not illustrated in the description below.

As shown in FIGS. 1 to 3, in an embodiment, the first plate body 11 and the second plate body 12 are sequentially connected in the east-west direction so that the photovoltaic assembly 1 can be less affected by a shading region, and under the same installation area, more groups of the first plate body 11 and the second plate body 12 can be arranged, increasing the power generation amount. Moreover, the first support assembly 2 engages between the right side of the first plate body 11 and the left side of the second plate body 12, and the two second support assemblies 3 are inserted into the left side of the first plate body 11 and the right side of the second plate body 12 respectively so that an isosceles triangle can be formed between the first plate body 11, the second plate body 12 and the baseplate 4, forming an oblique surface support structure for the first plate body 11 and the second plate body 12. Therefore, the installation operation is more convenient and simpler.

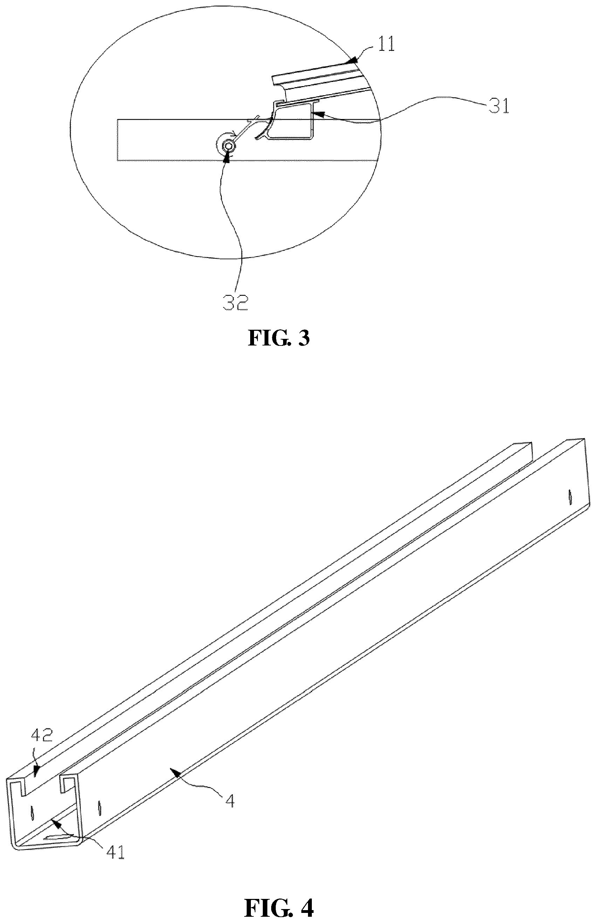

As shown in FIG. 4, in an embodiment, the baseplate 4 includes a groove 41; the opening of the groove 41 is provided with a limiting edge 42, the limiting edge 42 is configured to engage the left side of the first plate body 11 with the right side of the second plate body 12 in a limiting manner, and the length of the groove 41 extends in the east-west direction.

The first plate body 11 and the second plate body 12 are sequentially connected in the east-west direction. Since the first plate body 11 and the second plate body 12 are sequentially connected in the east-west direction, it is avoided that when the solar cell panels in the related art are sequentially arranged in the south direction, shadings between adjacent solar cell panels are noticeable in a region having high latitudes; In order to prevent the shadings from affecting the power generation amount, the distances between the adjacent solar cell panels need to exceed the shading region, so when the solar cell panels are installed in the south-north direction, the installed number of the solar cell panels is relatively small. A first solar cell panel and a second solar cell panel are sequentially connected in the east-west direction so that shadings can be prevented from being caused between the adjacent solar cell panels, and an isosceles triangle is formed between the first plate body 11, the second plate body 12 and the baseplate 4, that is, the first plate body 11 and the second plate body 12 are obliquely disposed above the baseplate 4 so that the lighting effects of the first plate body 11 and the second plate body 12 can be ensured. In an embodiment, the photovoltaic assembly 1 includes multiple groups of the first plate body 11 and the second plate body 12 that extend in the east-west direction.

The preferred material for the support apparatus is Q235 steel that has enough strength and good economic benefits.

The first support assembly 2 and the two second support assemblies 3 secure the photovoltaic assembly 1 onto one baseplate 4 so that the overall number of structural members can be reduced, facilitating installation and reducing the cost.

The first support assembly 2 engages between the right side of the first plate body 11 and the left side of the second plate body 12, and the two second support assemblies 3 are inserted between the left side of the first plate body 11 and the baseplate 4 and between the right side of the second plate body 12 and the baseplate 4 respectively so that the photovoltaic assembly 1 can be secured in the manners of engagement and insertion, being easy and convenient to operate and improving the installation efficiency.

Compared with the installation mode in the related art, the installation mode of the support apparatus according to the present application adopts the method of being inserted upwards and being pushed downwards, making the installation steps simpler. In the first step, the right end of the first plate body 11 and the left end of the second plate body 12 engage with the first support assembly 2. In the second step, one second support assembly 3 is inserted into the left side of the first plate body 11 while another second support assembly 3 is inserted into the right side of the second plate body 12. In the third step, the two second support assemblies 3 are securely connected to the baseplate 4. The detachment of the support apparatus is relatively convenient, and as long as the securing members between the two second support assemblies 3 and the baseplate 4 are dismantled, and the engagement relationship between the two second support assemblies 3 and the baseplate 4 is removed, the detachment operation of the assemblies is completed.

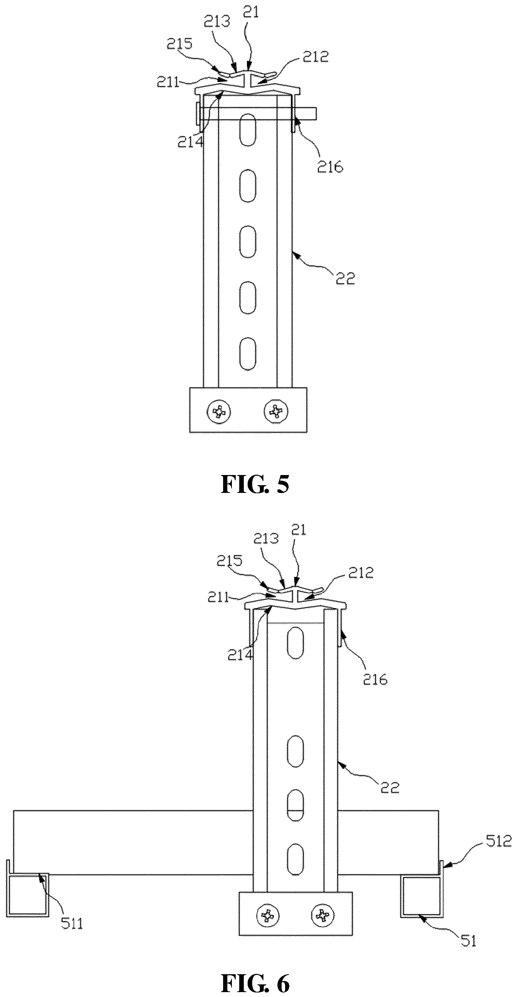

As shown in FIGS. 5 and 6, in an embodiment, the first support assembly 2 includes a first inserting member 21 and a first support column 22; the first inserting member 21 includes a first inserting groove 211 and a second inserting groove 212 that are opposite, the opening of the first inserting groove 211 faces the right side of the first plate body 11, and the opening of the second inserting groove 212 faces the left side of the second plate body 12; and the upper end of the first support column 22 is connected to the first inserting member 21, while the lower end of the first support column 22 is securely connected to the baseplate 4.

In an embodiment, at least one of the first inserting groove 211 and the second inserting groove 212 includes a first sidewall 213 and a second sidewall 214 that are opposite; and the distance between the first sidewall 213 and the second sidewall 214 gradually decreases in the direction towards the opening, the first sidewall 213 is at least partially oblique towards the second sidewall 214, and the second sidewall 214 is at least partially oblique towards the first sidewall 213 so that a groove wall of the at least one of the first inserting groove 211 and the second inserting groove 212 can be a wave oblique surface.

In an embodiment, the first sidewall 213 is provided with a guidance plate 215, the guidance plate 215 is located in the opening position of the first inserting groove 211, the second sidewall 214 is provided with a connecting plate 216, and the connecting plate 216 is located in the opening position of the first inserting groove 211; the guidance plate 215 is oblique in the direction facing away from the second sidewall 214 so that the first plate body 11 and the second plate body 12 can be obliquely connected above the baseplate 4; and the connecting plate 216 is oblique in the direction facing away from the first sidewall 213 and connects the first inserting member 21 to the first support column 22.

The first support assembly 2 plays the role in supporting the first plate body 11 and the second plate body 12 and fulfills the function of tightly engaging the bezels of the first plate body 11 and the second plate body 12. The design of a wave oblique surface structure is used in the inner regions of the first inserting groove 211 and the second inserting groove 212. The purpose is that when the first plate body 11 and the second plate body 12 are inserted into the first inserting groove 211 and the second inserting groove 212 respectively, the opening directions are suitable for the oblique insertion (insertion from top to bottom in accordance with a human body) of the first plate body 11 and the second plate body 12 so that the installation burden can be better reduced.

The first sidewall 213 is provided with the guidance plate 215 in the opening position of the first inserting groove 211 to form an oblique surface design with the first inserting groove 211. After the first plate body 11 and the second plate body 12 are inserted and placed in a natural state, the second sidewall 214 provides an oblique angle so that the first plate body 11 and the second plate body 12 can each have an oblique angle with the ground, helping the first plate body 11 and the second plate body 12 have better lighting.

The second sidewall 214 is provided with the connecting plate 216 in the opening position, and the connecting plate 216 is securely connected to the wall structure connecting the first support column 22 through screws. In the natural placement state of the first plate body 11 and the second plate body 12, in an embodiment, the opening width of the first inserting groove 211 and the second inserting groove 212 is 2.3 mm, while the thickness of the engagement joint between the first plate body 11 and the second plate body 12 is 2.5 mm so that an interference fit can be mutually caused, enabling the first plate body 11 and the second plate body 12 to be tightly engaged and not be easy to slide. The guidance plate 215 may limit the movement of the positions of adjacent bezels so that a positional offset is not easy to occur during the installation process.

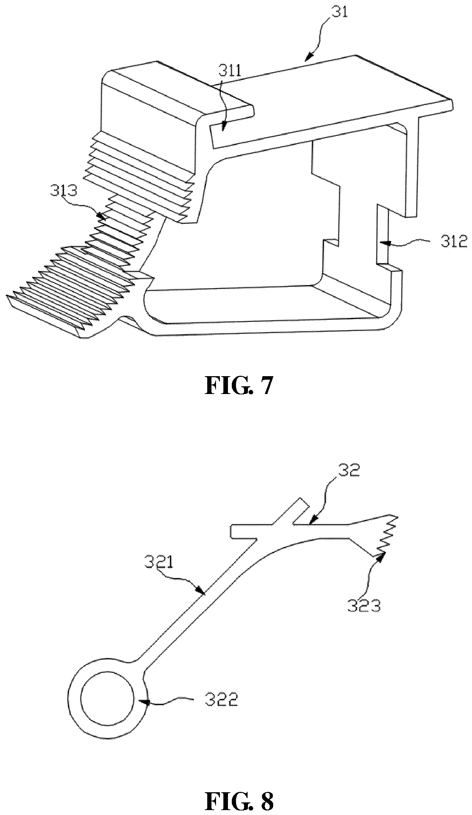

As shown in FIGS. 7 and 8, in an embodiment, a second support assembly 3 includes a first connector 31 and a second connector 32; the lower end of the second connector 32 is rotatably connected to the baseplate 4, and the second connector 32 is connected in at least one of the following forms: The upper end of the second connector 32 is connected to the first connector 31 and the left side of the first plate body 11, and the upper end of the second connector 32 is connected to the first connector 31 and the right side of the second plate body 12 so that an oblique angle of at least one of the first plate body 11 and the second plate body 12 above the baseplate 4 can be adjustable.

In an embodiment, the first connector 31 includes a third inserting groove 311, a limiting portion 312 and a first toothed surface 313; and the third inserting groove 311 is adaptively inserted into the left side of the first plate body 11 or the right side of the second plate body 12, the limiting portion 312 is adaptively connected to the baseplate 4, and the first toothed surface 313 extends in the height direction of the first connector 31.

In an embodiment, the second connector 32 includes a connecting rod 321, a rotation engagement portion 322 and a second toothed surface 323, where the rotation engagement portion 322 and the second toothed surface 323 are connected to two ends of the connecting rod 321, and the first toothed surface 313 is adaptively connected to the second toothed surface 323; and the rotation engagement portion 322 engages with the baseplate 4, the second toothed surface 323 is connected to the first toothed surface 313, and the rotation engagement portion 322 can adjust the angle of the second connector 32 so that a connecting oblique angle between the second toothed surface 323 and the first toothed surface 313 can be adjustable.

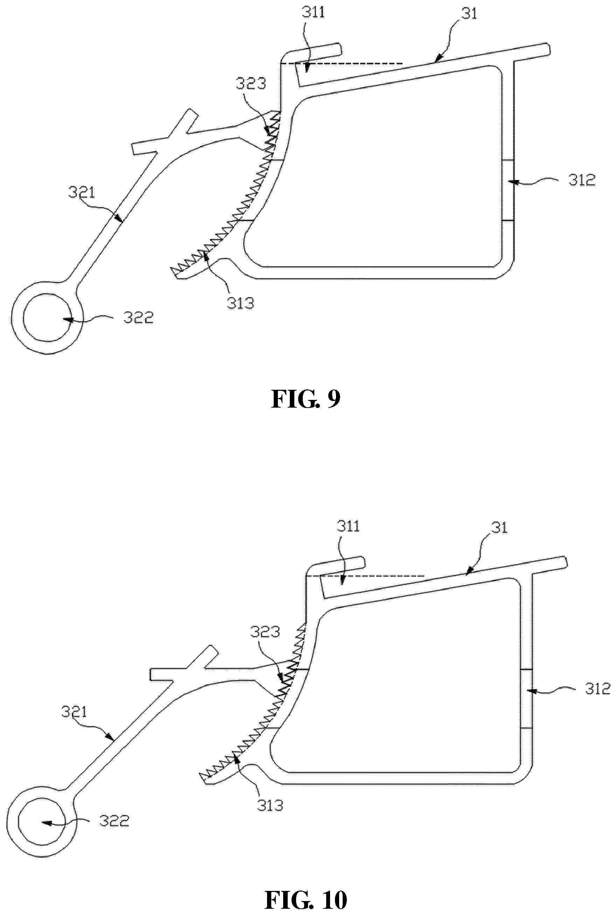

In an embodiment, the upper end of the first connector 31 is adaptively provided with the third inserting groove 311, the left side of the first plate body 11 is engaged with the third inserting groove 311 so that the engagement of the first connector 31 is completed towards the left side of the first plate body 11; an end surface of the first connector 31 facing away from the limiting portion 312 is provided with the first toothed surface 313, and the first toothed surface 313 is adaptively connected to the toothed surface of the second connector 32 so that the connecting oblique angle between the first connector 31 and the second connector 32 can be adjustable, that is, the oblique angle between the left side of the first plate body 11 and the baseplate 4 can be adjustable. As shown in FIG. 9, in the first adjustment state of the second support assembly 3, the second support assembly 3 places the first plate body 11 or the second plate body 12 in the maximum oblique slope. As shown in FIG. 10, in the second adjustment state of the second support assembly 3, the second support assembly 3 adjusts the first plate body 11 or the second plate body 12 to be in a relatively small oblique slope. Similarly, the oblique angle between the right side of the second plate body 12 and the baseplate 4 is adjustable on the same principle. The limiting portion 312 is an engagement groove obtained by I-shaped cutting, and the engagement groove can directly face the connecting groove of the baseplate 4 and is connected to the connecting groove, enabling the first connector 31 to be engaged on the baseplate 4.

In an embodiment, the lower end of the second connector 32 is rotatably connected to the baseplate 4, while in other embodiments, the lower end of the second connector 32 is hinged to the baseplate 4; and the lower end of the second connector 32 is provided with a shaft hole through which a bolt passes through the second connector 32 and the baseplate 4 so that the second connector 32 can be hinged to the baseplate 4. In an embodiment, the lower end of the second connector 32 is rotatably connected to the baseplate 4 so that the angle between the second connector 32 and the first plate body 11 and the angle between the second connector 32 and the first plate body 11 can be correspondingly adjusted when the second connector 32 is rotated for engagement, and so that the oblique angle between the first plate body 11 and the second plate body 12 towards the upper side can be adjustable, so as to satisfy various use environments and have relatively good lighting effects.

The lower portion of the second connector 32 is the rotation engagement portion 322, and the rotation engagement portion 322 is secured to the baseplate 4 through screws. The major function is to support the bezels of the first plate body 11 and the second plate body 12. The specific installation mode is the following: The rotation engagement portion 322 of the second connector 32 is secured to the baseplate 4, the first connector 31 is slid into the inside of the baseplate 4 from the end of the baseplate 4 along the track of the connecting groove of the baseplate 4, the third inserting groove 311 is mutually engaged with the bezel of the first plate body 11, and finally the rotation engagement portion 322 of the second connector 32 is rotated clockwise to engage with the sawteeth of the first connector 3.

In the three adjustment states of the second connector 32, the angle of rotating the second connector 32 may be arbitrarily adjusted in the region in which the first toothed surface 313 and the second toothed surface 323 cooperate with each other. Since the first connector 31 has a sliding distance, the overall positional adjustment occurs in the structural design so that the installation of the support apparatus can be more resilient, and the installation error can be filtered.

The first connector 31 and the second connector 32 are made of aluminum alloy material. The aluminum alloy material has a strong plasticity, may make a complex structure, may fulfill more functions, may be replaced by a high-strength plastic member, but requires a high hardness, and is not easy to deform and break.

In an embodiment, the support apparatus further includes a bearing rack 5; a side end of the bearing rack 5 is inserted into the baseplate 4, and the bottom of the bearing rack 5 is provided with a bearing base 51; and the bearing base 51 includes a bearing plate 511 and a baffle 512, the baffle 512 is disposed on a side of the bearing plate 511, and the bearing plate 511 is configured to support a bearing block to improve the stability of the support apparatus serving as the photovoltaic assembly 1.

The structure cross section of the bearing rack 5 uses the H-type structure, the baffle 512 on the side of the bearing plate 511 limits the forward and backward movements of the bearing block located on the bearing plate 511, and the bearing plate 511 at the bottom of the bearing rack 5 plays the role in supporting the bearing block; and an end of the bearing rack 5 is provided with a groove to engage the bearing rack 5 on the baseplate 4 so that the bearing rack 5 can play a supporting role, and the installation is more stable. Meanwhile, the bearing rack 5 is connected to the baseplate 4 distributed at two ends of the first plate body 11 and the second plate body 12 so that the overall body is more stable.

### Embodiment two

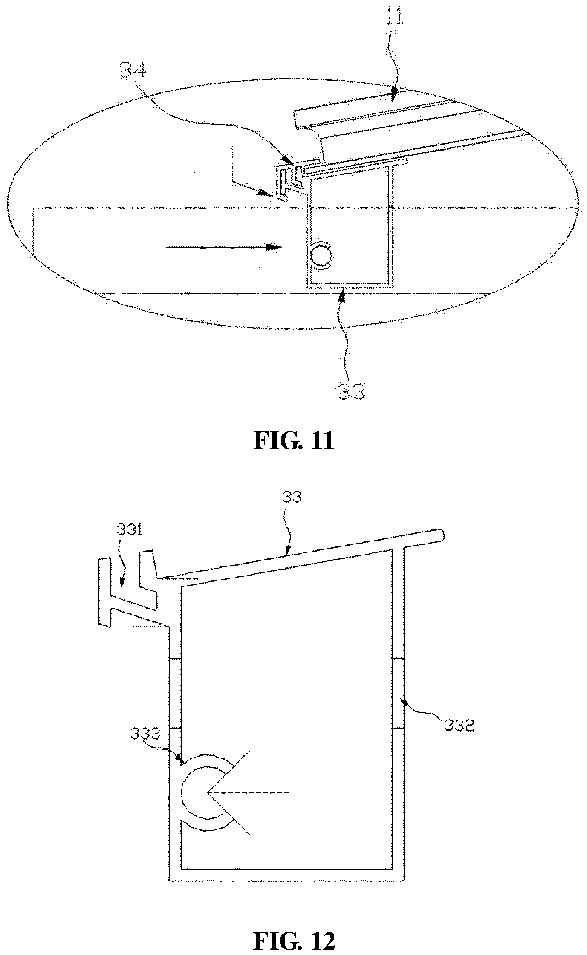

Referring to FIGS. 11 to 13, this embodiment is different from embodiment one in that the second support assembly 3 further includes a third connector 33 and an insert cover 34; the third connector 33 is disposed by using at least one of the following manners: The first end of the third connector 33 is inserted into the left side of the first plate body 11, and the first end of the third connector 33 is inserted into the right side of the second plate body 12. The second end of the third connector 33 is connected to the baseplate 3. The insert cover 34 is disposed by using at least one of the following configurations: The insert cover 34 can cover on and be secured to the insertion joint between an end of the third connector 33 and the left side of the first plate body 11, and the insert cover 34 can cover on and be secured to the insertion joint between an end of the third connector 33 and the right side of the second plate body 12.

In an embodiment, the installation mode of the second support assembly 3 and the photovoltaic assembly 1 uses the installation mode of being inserted upwards and being placed downwards. First, the bezel of the right side of the first plate body 11 is inserted into the first support assembly 2, the bezel of the left side of the first plate body 11 is lowered on the third connector 33 of the second support assembly 3, and finally the insert cover 34 is obliquely inserted downward into a fourth inserting groove 331 of the third connector 33 and presses the end of left bezel of the first plate body 11. The detachment mode is that the insert cover 34 is extracted out from the side of the photovoltaic assembly 1, and the photovoltaic assembly 1 is lifted out. The installation and detachment process of the second plate body 12 has the same principle as that of the first plate body 11.

The notch of the fourth inserting groove 331 mutually engages with the insert cover 34, a connecting ring 333 of a circular hole structure of the lower end of the third connector 33 is secured to the baseplate 4 through a bolt, and the middle of the third connector 33 uses an I-shaped groove 332 obtained by I-shaped cutting so that the third connector 33 can be more conveniently connected to the baseplate 4.

When the second support assembly 3 is secured, the third connector 33 is slid into the baseplate 4 from the end of the baseplate 4, then the third connector 33 is securely connected to the baseplate 4 through screws, the bezel of the left side of the first plate body 11 is placed downwards on the second support assembly 3, and finally the insert cover 34 is obliquely inserted downward into the fourth inserting groove 331 to press the left bezel of the first plate body 11. Namely, the fixation is completed.

### Embodiment three

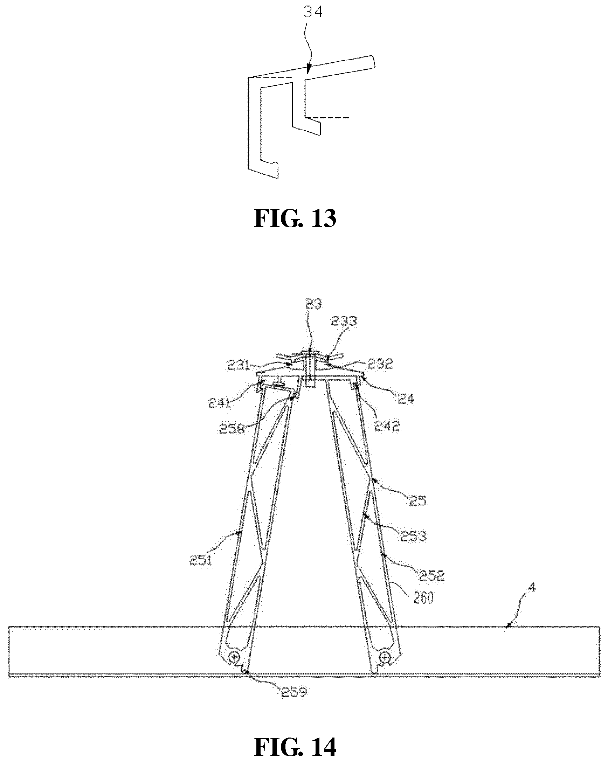

Referring to FIG. 14, this embodiment is different from embodiment one in that the first support assembly 2 includes a second inserting member 23, a connecting portion 24 and a support frame 25; the second inserting member 23 includes a fifth inserting groove 231 and a sixth inserting groove 232 that are opposite; the opening of the fifth inserting groove 231 faces the right side of the first plate body 11, the opening of the sixth inserting groove 232 faces the left side of the second plate body 12, a first protruding block 233 is provided inside the fifth inserting groove 231 and the sixth inserting groove 232, and the first protruding block 233 can engage the connecting portion 24 with the inner sides of the fifth inserting groove 231 and the sixth inserting groove 232; and the connecting portion 24 is securely connected to the support frame 25. The first protruding block 233 plays the role in limiting the connecting portion 24 so that the stable and reliable connection between the second inserting member 23 and the connecting portion 24 can be ensured.

In an embodiment, the connecting portion 24 includes a seventh inserting groove 241, an eighth inserting groove 242 and an buckle structure 258, and the support frame 25 includes a first support rod group 251 and a second support rod group 252; the opening of the seventh inserting groove 241 faces the first support rod group 251, and the opening of the eighth inserting groove 242 is vertical to the extension direction of the second support rod group 252; the upper end of the first support rod group 251 is inserted into the seventh inserting groove 241, and the lower end of the first support rod group 251 is rotatably connected to the baseplate 4; and the upper end of the second support rod group 252 is securely connected to the eighth inserting groove 242, the second inserting member 23, the connecting portion 24 and the second support rod group 252 are securely connected to be integrated, and the lower end of the second support group 252 is rotatably connected to the baseplate 4.

In an embodiment, at least one of the first support rod group 251 and the second support rod group 252 includes multiple support rods 260, and hollow positions between adjacent support rods 260 are provided with stiffeners 253.

The support apparatus may be formed by the second inserting member 23, the connecting portion 24, the first support rod group 251, the second support rod group 252, the baseplate 4 and others. The second inserting member 23 is connected to the second support rod group 252 on the right side and the connecting portion 24 through a bolt, and the bolt penetrates the second support rod group 252 and the connecting portion 24 to form a right main structure, the second inserting member 23 is connected to the first support rod group 251 on the left side and the connecting portion 24 through a bolt, and the bolt penetrates the first support rod group 251 and the connecting portion 24 to form a left main structure. The first support rod group 251 on the left side is rotated around the bolt, the right main body is rotated around the bolt, the installation is completed depending on the connection mode of the buckle structure 258 in the connecting portion 24, and the buckle structure 258 is located on a side of the connecting portion 24 facing away from the second inserting member 23. The advantages of this installation mode are that the structures of the first support rod group 251 on the left side and the second support rod group 252 on the right side can be installed before delivery; and during the field installation, only the first support rod group 251 on the left side and the second support rod group 252 on the right side need to be engaged with and installed on the baseplate 4, then the first support rod group 251 and the second support rod group 252 are rotated around the bolt to the mutual engagement position, and there is no need to tighten the screws on site so that the installation procedures can be greatly reduced, and the installation efficiency can be simultaneously accelerated. The hollow positions between the adjacent support rods 260 are provided with the stiffener 253 so that the strength of the overall support member can be improved. In this embodiment, the bolt of the baseplate 4 mutually engages with the circular hole structure so that the rotation action can be achieved, the bottom of the first support rod group 251 and the bottom of the second support rod group 252 are each provided with a bottom support 259, and the bottom support 259 may be a triangular frame that plays a supporting role so that the suspension of the bottom of the support frame 25 can be prevented, and the support strength of the support frame 25 can be increased. Embodiment four

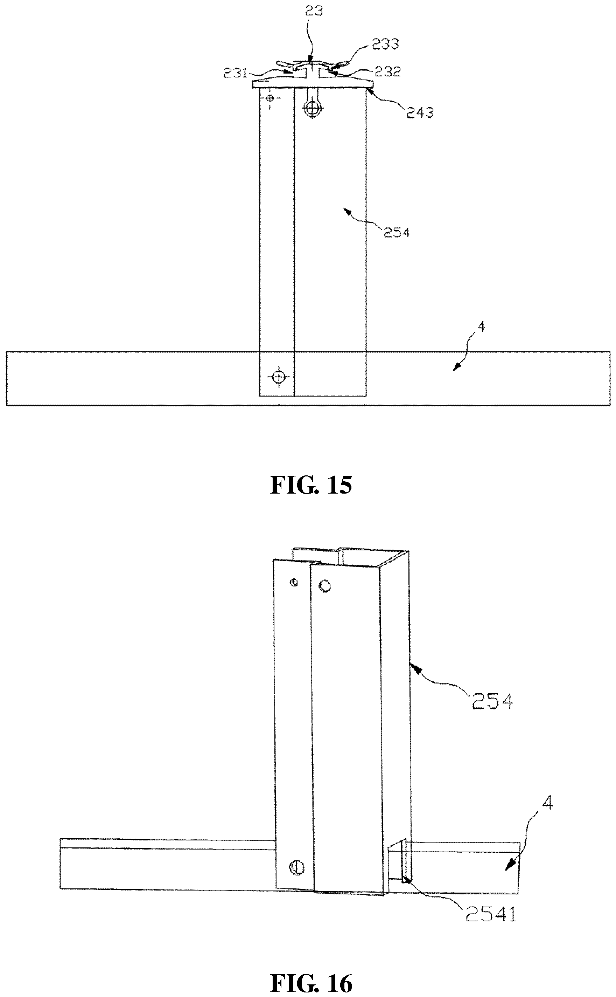

Referring to FIG. 15, this embodiment is different from embodiment three in that the connecting portion 24 includes a connecting panel 243; the connecting panel 243 is securely connected to the first end of the support frame 25, and the second end of the support frame 25 is rotatably connected to the baseplate 4.

In an embodiment, the support frame 25 includes a second support column 254, and the upper end surface of the second support column 254 is at least partially bonded and securely connected to an end of the connecting portion 24.

After the first support assembly 2 and the second support column 254 are secured through bolts, an overall body formed by the first support assembly 2 and the second support column 254 is secured to the baseplate 4 through bolts so that the overall structure can be rotated around the bolt at the lower left corner, and when the overall structure is rotated to the upright position, the installation operation is completed.

As shown in FIG. 16, the advantages of the preceding support apparatus are the following: The structure of the first support assembly 2 can be modularized, the first support assembly 2 can be secured as an overall body through bolts, and the parts can be assembled before delivery. The subsequent installation can be completed only by rotating the overall structure from horizontal to vertical. Therefore, the installation efficiency can be greatly improved. A notch 2541 of the lower end of the second support column 254 and the baseplate 4 are mutually inlaid and engaged, and the bolt hole of the lower end of the second support column 254 is secured to the baseplate 4 so that the second support column 254 can be rotated around the bolt, and the bolt hole on the top of the second support column 254 and the connecting portion 24 are mutually securely connected to form an overall body.

### Embodiment five

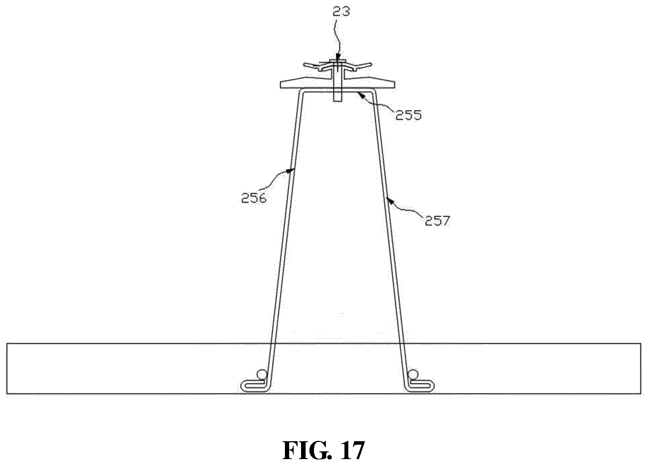

Referring to FIG. 17, this embodiment is different from embodiment three in that the support frame 25 includes an attaching rod 255, a first resilient leg 256 and a second resilient leg 257; the first end of the first resilient leg 256 and the first end of the second resilient leg 257 are opposite to each other on two sides of the attaching rod 255, and the attaching rod 255, the second inserting member 23 and the connecting portion 24 are integrally and securely connected; and the second end of the first resilient leg 256 and the second end of the second resilient leg 257 can engage with the baseplate 4.

The preceding support frame 25 is a π-shaped support mainly formed by the attaching rod 255, the first resilient leg 256 and the second resilient leg 257, and the support frame 25, the second inserting member 23 and the connecting portion 24 form the first support assembly 2. First, the second inserting member 23, the connecting portion 24 and the π-shaped support frame 25 are securely connected through bolts, and the bolts penetrates the second inserting member 23, the connecting portion 24 and the "π''-shaped support frame 25 to form an overall body. The installation mode is that two sides of the bottom of the "π''-shaped support frame 25 are pressed to be deformed and engaged with the installation clearances of the bolts of the baseplate 4, and the "π''-shaped support member is released and sprung back to complete the installation.

The advantages of the preceding support frame 25 are the following: The support frame 25, the second inserting member 23 and the connecting portion 24 can be installed and secured through bolts before delivery; during the field installation, the bottom of the "π''-shaped support frame 25 is directly pressed to be deformed and is inserted into the installation clearances in the bolts integrated on the baseplate 4, the support frame 25 is released and sprung back to complete the installation of the structure; the installation step of tightening screws is not required in the installation process so that the installation efficiency can be greatly increased; the bottom of the first resilient leg 256 and the bottom of the second resilient leg 257 are bent outwardly by a preset angle so that the bottoms can be deformed to a certain extent to be engaged in the installation clearances of the bolts of the baseplate 4; and the bottom of the overall structure needs to have a deformed variable of about 23 mm so that the "π"-shaped support frame 25 can be installed in an engagement manner from top to bottom.

## Claims

1. A support apparatus, configured to support a photovoltaic assembly (1),
wherein the photovoltaic assembly (1) comprises a first plate body (11) and a second plate body (12) that are sequentially connected in a preset direction;
the support apparatus comprises a first support assembly (2), two second support assemblies (3) and a baseplate (4); and
the first support assembly (2) engages between a first side of the first plate body (11) and a first side of the second plate body (12) and is configured to support the first side of the first plate body (11) and the first side of the second plate body (12) above the baseplate (4),
wherein the two second support assemblies (3) are inserted between a second side of the first plate body (11) and the baseplate (4) and between a second side of the second plate body (12) and the baseplate (4) respectively, and the two second support assemblies (3) are obliquely connected to the second side of the first plate body (11) and the second side of the second plate body (12) respectively to enable an isosceles triangle to be formed between the first plate body (11), the second plate body (12) and the baseplate (4);
wherein the first side of the first plate body (11) is opposite to the first side of the second plate body (12), the second side and first side of the first plate body (11) are opposite sides of the first plate body (11), and the first side and second side of the second plate body (12) are opposite sides.

2. The support apparatus according to claim 1, wherein the first support assembly (2) comprises a first inserting member (21) and a first support column (22);
the first inserting member (21) comprises a first inserting groove (211) and a second inserting groove (212) that are opposite, an opening of the first inserting groove (211) faces to the first side of the first plate body (11), and an opening of the second inserting groove (212) faces to the first side of the second plate body (12); and
a first end of the first support column (22) is connected to the first inserting member (21), and a second end of the first support column (22) is securely connected to the baseplate (4).

3. The support apparatus according to claim 2, wherein at least one of the first inserting groove (211) and the second inserting groove (212) comprises a first sidewall (213) and a second sidewall (214) that are opposite; and
a distance between the first sidewall (213) and the second sidewall (214) gradually decreases in a direction towards the opening of the first inserting groove (211), the first sidewall (213) is at least partially oblique towards the second sidewall (214), and the second sidewall (214) is at least partially oblique towards the first sidewall (213), so as to enable a groove wall of the at least one of the first inserting groove (211) and the second inserting groove (212) to be a wave oblique surface.

4. The support apparatus according to claim 3, wherein the first sidewall (213) is provided with a guidance plate (215), the guidance plate (215) is located on at least one of an opening position of the first inserting groove (211) and an opening position of the second inserting groove (212), the second sidewall (214) is provided with a connecting plate (216), and the connecting plate (216) is located on the at least one of the opening position of the first inserting groove (211) and the opening position of the second inserting groove (212);
the guidance plate (215) is oblique in a direction facing away from the second sidewall (214) to enable the first plate body (11) and the second plate body (12) to be obliquely connected above the baseplate (4); and
the connecting plate (216) is oblique in a direction facing away from the first sidewall (213) and connects the first inserting member (21) to the first support column (22).

5. The support apparatus according to claim 1, wherein the two second support assemblies (3) each comprise a first connector (31) and a second connector (32);
the first connector (31) and the second connector (32) are configured in at least one of the following manners to enable an oblique angle of at least one of the first plate body (11) and the second plate body (12) above the baseplate (4) to be adjustable: a first end of the second connector (32) is rotatably connected to the baseplate (4); a second end of the second connector (32) is connected to the first connector (31) and the second side of the first plate body (11); and
the first connector (31) is connected to the second side of the second plate body (12).

6. The support apparatus according to claim 5, wherein the first connector (31) comprises a third inserting groove (311), a limiting portion (312) and a first toothed surface (313); and
the third inserting groove (311) is adaptively inserted into the second side of the first plate body (11) or the second side of the second plate body (12), the limiting portion (312) is adaptively connected to the baseplate (4), and the first toothed surface (313) extends in a height direction and is adaptively connected to the second connector (32).

7. The support apparatus according to claim 5 or 6 wherein the second connector (32) comprises a connecting rod (321), a rotation engagement portion (322) and a second toothed surface (323), wherein the rotation engagement portion (322) and the second toothed surface (323) are connected to two ends of the connecting rod (321) respectively; and
the rotation engagement portion (322) engages with the baseplate (4), the second toothed surface (323) is connected to the first connector (31), and the rotation engagement portion (322) is able to adjust an angle of the second connector (32) to enable a connecting oblique angle between the second toothed surface (323) and the first connector (31) to be adjustable.

8. The support apparatus according to claim 1 or 2, further comprising a bearing rack (5), wherein a first end of the bearing rack (5) is inserted into the baseplate (4), and a second end of the bearing rack (5) is provided with a bearing base (51); and
the bearing base (51) comprises a bearing plate (511) and a baffle (512), the baffle (512) is disposed on a side of the bearing plate (511), and the bearing plate (511) is configured to support a bearing block.

9. The support apparatus according to claim 1, wherein the two second support assemblies (3) each comprise a third connector (33) and an insert cover (34);
wherein the third connector (33) is disposed by using at least one of the following manners: A first end of the third connector (33) is inserted into the second side of the first plate body (11); or a first end of the third connector (33) is inserted into the second side of the second plate body (12);
a second end of the third connector (33) is connected to the baseplate (4);
wherein the insert cover (34) is disposed by using at least one of the following manners:
the insert cover (34) covers on and is secured to an insertion joint between the first end of the third connector (30) and the second side of the first plate body (11); or
the insert cover (34) covers on and is secured to an insertion joint between the first end of the third connector (30) and the second side of the second plate body (12).

10. The support apparatus according to claim 1, wherein the first support assembly (2) comprises a second inserting member (23), a connecting portion (24) and a support frame (25);
the second inserting member (23) comprises a fifth inserting groove (231) and a sixth inserting groove (232) that are opposite;
an opening of the fifth inserting groove (231) faces to the first side of the first plate body (11), an opening of the sixth inserting groove (232) faces to the first side of the second plate body (12), a first protruding block (233) is disposed inside the fifth inserting groove (231) and the sixth inserting groove (232), and the first protruding block (233) is configured to engage the connecting portion (24) with an inner side of the fifth inserting groove (231) and an inner side of the sixth inserting groove (232); and
the connecting portion (24) is securely connected to the support frame (25).

11. The support apparatus according to claim 10, wherein the connecting portion (24) comprises a seventh inserting groove (241) and an eighth inserting groove (242), and the support frame (25) comprises a first support rod group (251) and a second support rod group (252);
an opening of the seventh inserting groove (241) faces to the first support rod group (251), and an opening of the eighth inserting groove (242) is vertical to an extension direction of the second support rod group (252);
a first end of the first support rod group (251) is inserted into the seventh inserting groove (241), and a second end of the first support rod group (251) is rotatably connected to the baseplate (4); and
a first end of the second support rod group (252) is securely connected to the eighth inserting groove (242), the second inserting member (23), the connecting portion (24) and the second support rod group (252) are securely connected to be integrated, and a second end of the second support rod group (252) is rotatably connected to the baseplate (4).

12. The support apparatus according to claim 10, wherein at least one of a first support rod group (251) and a second support rod group (252) comprises a plurality of support rods (260); and
hollow positions between adjacent ones of the plurality of support robs (260) are provided with stiffeners (253).

13. The support apparatus according to claim 10, wherein the connecting portion (24) comprises a connecting plane (243); and
the connecting panel (243) is securely connected to a first end of the support frame (25), and a second end of the support frame (25) is rotatably connected to the baseplate (4).

14. The support apparatus according to claim 13, wherein the support frame (25) comprises a second support column (254); and
an end surface of the second support column (254) is at least partially securely bonded and connected to the connecting panel (243) in an attaching manner.

15. The support apparatus according to claim 13, wherein the support frame (25) comprises an attaching rod (255), a first resilient leg (256) and a second resilient leg (257);
a first end of the first resilient leg (256) and a first end of the second resilient leg (257) are disposed on two opposite sides of the attaching rod (255), respectively, and the attaching rod (255), the second inserting member (23) and the connecting portion (24) are integrally and securely connected together; and
a second end of the first resilient leg (256) and a second end of the second resilient leg (257) are capable of engaging with the baseplate (4).

16. The support apparatus according to claim 1, wherein the baseplate (4) comprises a groove (41); and
an opening of the groove (41) is provided with a limiting edge (42), the limiting edge (42) is configured to engage the second side of the first plate body (11) with the second side of the second plate body (12) in a limiting manner, and a length of the groove (41) extends in the preset direction.
